# EUROPEAN PATENT SPECIFICATION

(11) **EP 2 105 621 B1**
(45) Date of publication and mention of the grant of the patent: **02.03.2016**
(21) Application number: 07850743.1
(22) Date of filing: 17.12.2007
(51) Int. Cl.: F16D 3/20, F16B 21/18, F16D 3/205, F16D 3/227

(54) **CONSTANT VELOCITY UNIVERSAL JOINT FOR PROPELLER SHAFT**
HOMOKINETISCHES KARDANGELENK FÜR PROPELLERWELLE
JOINT UNIVERSEL HOMOCINÉTIQUE POUR ARBRE DE TRANSMISSION

(30) Priority: 16.01.2007 JP 2007007136
(43) Date of publication of application: 30.09.2009
(73) Proprietor: NTN Corporation, Osaka-shi, Osaka 550-0003 (JP)
(72) Inventor: MOCHINAGA, Shuji, Iwata-shi Shizuoka 438-0037 (JP)
(74) Representative: Grünecker Patent- und Rechtsanwälte PartG mbB
(86) International application number: PCT/JP2007/074255
(87) International publication number: WO 2008/087824

(56) References cited:
- JP-A- 2000 074 084
- JP-A- 2003 312 284
- US-A1- 2005 124 420
- US-A1- 2005 124 423
- US-A1- 2005 130 750
- US-A1- 2005 130 751

## Description

### TECHNICAL FIELD

The present invention relates to a constant velocity universal joint for a propeller shaft used in a power transmission system of automobiles.

### BACKGROUND ART

A propeller shaft of a power transmission system includes a drive shaft and a driven shaft. The drive shaft is connected to a transmission. The driven shaft is connected to the drive shaft with a constant velocity universal joint therebetween. The propeller shaft serves as resistance against impact when a vehicle is in a collision. Therefore, the propeller shaft is conventionally provided with a shock absorbing mechanism (shock absorbing structure) (for example, Patent Document 1: Japanese Patent Laid-open Publication No. 2003-146098).

As shown in Fig. 6, a constant velocity universal joint used in a power transmission system described in Patent Document 1 includes an outer ring 3 serving as an outer joint member, an inner ring 6 serving as an inner joint member, a torque transmitting ball 7, and a cage 8. A plurality of track grooves 2 extending in an axial direction are formed on a cylindrical inner circumferential surface 1 of the outer ring 3. A plurality of track grooves 5 extending in the axial direction are formed on a spherical outer circumferential surface 4 of the inner ring 6. The torque transmitting ball 7 is disposed on a ball track formed by a pair of a track groove 2 on the outer ring 3 and a track groove 5 on the inner ring 6. The cage 8 holds the torque transmitting ball 7.

In this instance, the driven shaft includes the outer ring 3 of the constant velocity universal joint and a cylindrical body 10 joined with the outer ring 3. The outer ring 3 and the cylindrical body 10 are, for example, joined by friction welding. Here, friction welding (friction pressure welding) refers to a method in which, after a rotating member and a fixed member are placed in contact, the rotating member and the fixed member press against each other with a certain amount of constant pressure (P1). As a result, the temperature of the contact surface rises due to frictional heat, gradually reaching a temperature required for pressure welding. Once the required temperature is reached, the rotation is suddenly stopped. At the same time, the rotating member and the fixed member press against each other with an amount of pressure P2 (P2≥P1) that is the same as P1 or greater. As a result, the rotating member and the fixed member are joined.

A shaft (stub shaft) 11 on the drive shaft side is fitted into the inner ring 6 of the constant velocity universal joint. In other words, a spline section 6a is formed on an inner circumferential surface of a center hole of the inner ring 6. An end spline section 11 a of the shaft (stub shaft) 11 is inserted into the center hole. The spline section 6a on the inner ring 6 side and the end spline section 11 a on the shaft 11 side engage. A stopper ring 12 is attached to the end of the end spline section 11a of the stub shaft 11.

An opening section of the outer ring 3 on the stub shaft 11 side is sealed by a boot 13. The boot 13 includes a large diameter section 13a, a small diameter section 13b, and a connecting section 13c. The large diameter section 13a is attached to the outer ring 3. The small diameter section 13b is attached to the stub shaft 11. The connecting section 13c connects the large diameter section 13a and the small diameter section 13b. The large diameter section 13a includes a first cylindrical section 14, a radial direction wall section 15, and a second cylindrical section 16. The first cylindrical section 14 is fitted onto the outer ring 3. The radial direction wall section 15 extends in an inner radial direction from the first cylindrical section 14 and corresponds with an end surface of the outer ring 3. The second cylindrical section 16 extends in the axial direction from the radial direction wall section 15. A reinforcing material 17 is disposed within the large diameter section 13a.

The large diameter section 13a of the boot 13 is fixed onto the outer ring 3 by a boot band 18 being fastened in a state in which the first cylindrical section 14 is fitted onto the opening section of the outer ring 3. The small diameter section 13b of the boot 13 is fixed onto the stub shaft 11 by a boot band 19 being fastened in a state in which the small diameter section 13b is fitted onto a boot attaching section of the stub shaft 11.

A sealing plate (end plate) 20 for holding lubricating grease within is attached to the outer ring 3. The sealing plate 20 includes a disk-shaped main body 20a and a circumferential wall 20b. The circumferential wall 20b extends in the axial direction from an outer circumferential edge of the disk-shaped main body 20a. The sealing plate 20 is fitted into the cylindrical body 10 side of the outer ring 3. At this time, the outer diameter dimension of the circumferential wall 20b is slightly larger than the inner diameter dimension of an attaching section 9 of the outer ring 3. The sealing plate 20 is press-fitted into the attaching section 9 of the outer ring 3.

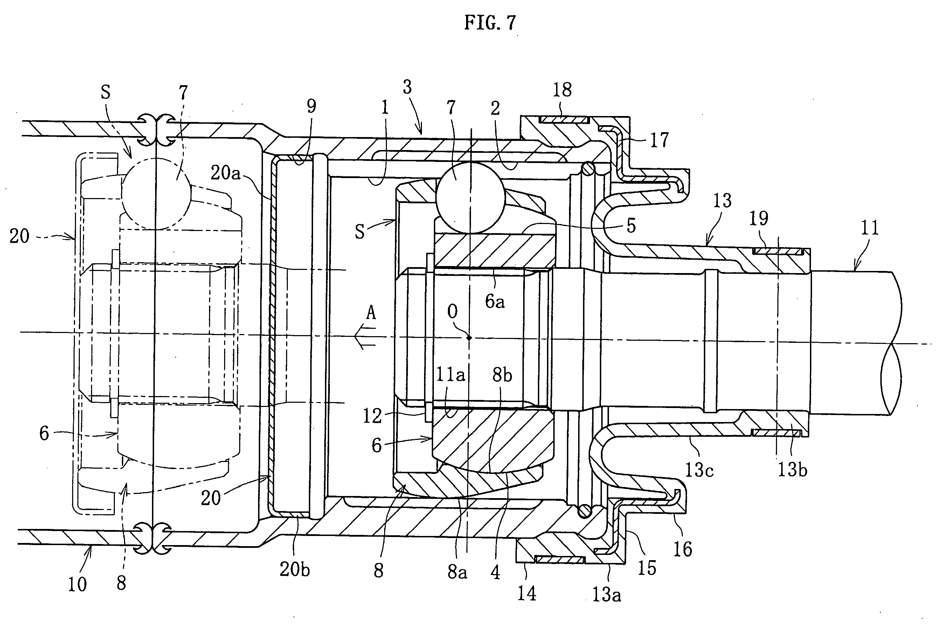

When the vehicle is in a collision, the impact caused by the collision is absorbed as follows. As shown in Fig. 7, when the drive shaft side slides in an arrow A direction in relation to the outer ring 3, the sealing plate 20 is pressed in the arrow A direction by an internal member S including the inner ring 6. The sealing plate 20 is released from its state of being, press-fitted into the attaching section 9 of the outer ring 3. As shown by phantom lines, the sealing plate 20 moves with the internal member S to the cylindrical body 10 side.
Patent Document 1: Japanese Patent Laid-open Publication No. 2003-146098
The document US 2005/124420 A1 according to the preamble of claim 1 discloses a constant velocity universal unit for a propeller shaft tuned for energy absorption, wherein one or more energy absorption surfaces distal to the normal axial range and located in the extended axial range upon said outer joint part, so that the energy absorption surface interferes with the inner joint part or at least one of the plurality of rollers when the outer joint part is operated beyond the normal axial range in the extended axial range.

### DISCLOSURE OF THE INVENTION

### PROBLEMS TO BE SOLVED BY THE INVENTION

In the invention described in Patent Document 1, the sealing plate 20 is attached by press-fitting to absorb impact from a collision. Therefore, detachment preventing capability of the sealing plate 20 is weak. During assembly to the vehicle and the like, the constant velocity universal joint may slide. The internal member S may interfere with the sealing plate 20, and the sealing plate 20 may become detached. Therefore, care is required during assembly and the like.

To prevent interference between the sealing plate 20 and the internal member S, placement of a circlip near the sealing plate 20 has been proposed. However, because the purpose of the circlip is to prevent detachment, a high-strength material is used, and the circlip has high detachment preventing capability. Therefore, when a collision or the like occurs and the internal member S collides with the circlip, the internal member S breaks. However, because the circlip is present to prevent detachment, the sealing plate 20 cannot move with the internal member S towards the cylindrical body 10 side. **It is the object of**, the present invention **to** provides-a constant velocity universal joint for a propeller shaft that achieves sufficient shock absorbing performance during a collision and the like, and also effectively prevents detachment of a sealing plate during assembly and the like.
**This object is solved by the features of claim 1. Further improvements are laid down in the subclaims.**

### MEANS FOR SOLVING THE PROBLEMS

A constant velocity universal joint for a propeller shaft of the present invention includes an outer joint member, an inner joint member fitted into the outer joint member, and a torque transmitting member that is interposed between the outer joint member and the inner joint member and transmits torque. A shaft is inserted into the inner joint member. An internal member including the inner joint member slides along an axial direction in relation to the outer joint member. The outer joint member includes a sealing plate, and a circlip or a ring-shaped member, such as an O-ring, that is disposed closer to the inner member side than the sealing plate. The circlip (or O-ring) restricts contact between the internal member and the sealing plate in a non-impact situation. The circlip (or O-ring) allows the internal member to hit the sealing plate side, thereby detaching the sealing plate, when impact occurs.

In the constant velocity universal joint for a propeller shaft of the present invention, contact between the internal member and the sealing plate is prevented during a non-impact situation. Therefore, detachment of the sealing plate can be prevented during assembly and the like that are non-impact situations. When impact occurs, the sealing plate is allowed to become detached as a result of the internal member hitting the sealing plate side. Therefore, the internal member can slide over a great distance towards a counter-opening section side. As a result, impact during a collision can be absorbed.

Because the circlip (or O-ring) is made of a low-strength material that breaks as a result of the internal member moving towards the sealing plate side when impact occurs, the internal member is allowed to slide towards the counter-opening section side. Impact during a collision and the like can be stably absorbed.

### ADVANTAGE OF THE INVENTION

In the constant velocity universal joint for a propeller shaft of the present invention, detachment of the dealing plate can be prevented during assembly and the like that are non-impact situations. Therefore, ease of handling during assembly and the like is excellent. When impact occurs, the internal member can slide over a great distance towards the counter-opening section side. As a result, impact during a collision and the like can be absorbed. Sufficient shock absorbing performance can be achieved, and damage to the internal member and the like can be prevented.

Because the circlip is made of a low-strength material, reliability of impact absorption during a collision and the like can be enhanced.

The circlip is a ring of which a portion is an absent section. Alternatively, the circlip is a rubber ring, such as an O-ring. Therefore, the circlip can be easily stretched and contracted, simplifying attachment operation.

### BRIEF DESCRIPTION OF THE DRAWINGS

Fig. 1 is a cross-sectional view of a constant velocity universal joint for a propeller shaft according to an embodiment of the present invention;
Fig. 2 is a cross-sectional view explaining a mechanism of the constant velocity universal joint for a propeller shaft;
Fig. 3A and Fig. 3B are diagrams of a circlip of the constant velocity universal joint for a propeller shaft, in which Fig. 3A is an enlarged view of when a ring having a portion that is an absent section is used and Fig. 3B is an enlarged view of when an O-ring is used;
Figs. 4A to Fig. 4D are enlarged cross-sectional views of the circlip of the constant velocity universal joint for a propeller shaft;
Fig. 5 is a cross-sectional view of a constant velocity universal joint for a propeller shaft according to another embodiment of the present invention;

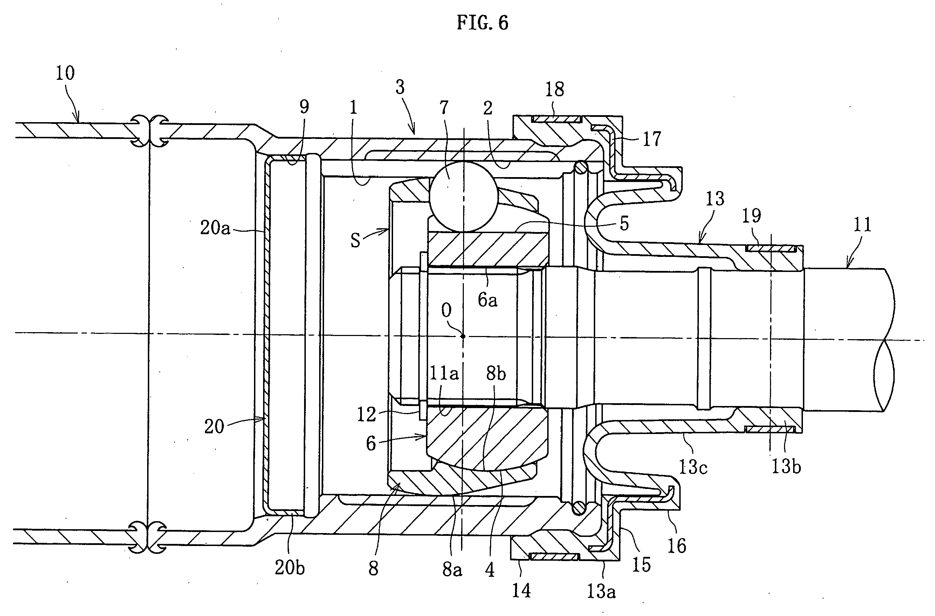

Fig. 6 is a cross-sectional view of a conventional constant velocity universal joint for a propeller shaft; and
Fig. 7 is a cross-sectional view of a mechanism of the conventional constant velocity universal joint for a propeller shaft.

### BEST MODE FOR CARRYING OUT THE INVENTION

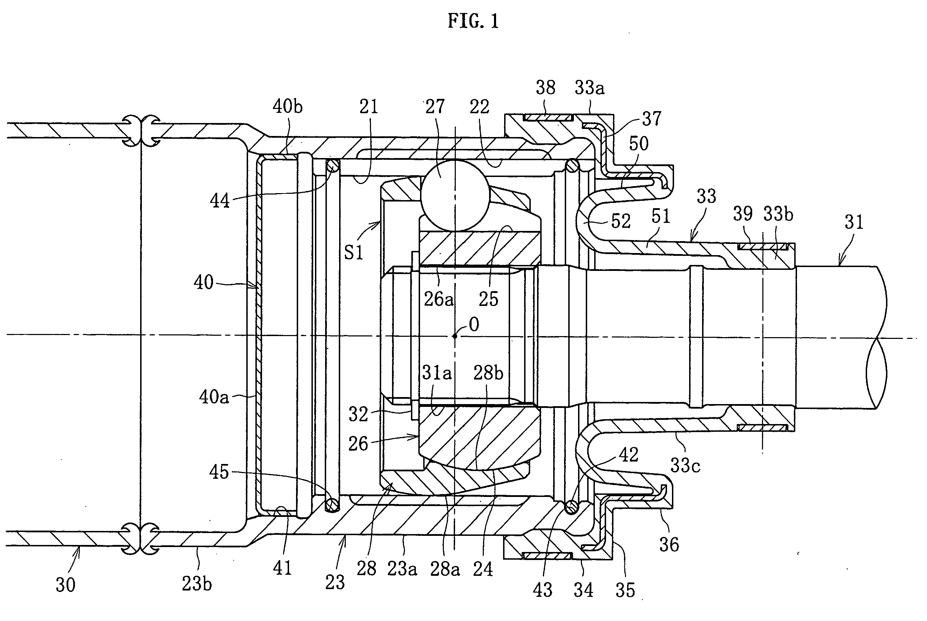

Embodiments of the present invention will be described below with reference to Fig. 1 to Fig. 5. Fig. 1 is a diagram of a constant velocity universal joint for a propeller shaft according to a first embodiment. The constant velocity universal joint for a propeller shaft includes an outer ring 23 serving as an outer joint member, an inner ring 26 serving as an inner joint member, a torque transmitting ball 27, and a cage 28. A plurality of track grooves 22 extending in an axial direction are formed on a cylindrical inner circumferential surface 21 of the outer ring 23. A plurality of track grooves 25 extending in the axial direction are formed on a spherical outer circumferential surface 24 of the inner ring 26. The torque transmitting ball 27 is disposed on a ball track formed by a pair of a track groove 22 on the outer ring 23 and a track groove 25 on the inner ring 26. The cage 28 holds the torque transmitting ball 27. A center of a spherical outer circumferential surface 28a and a center of a spherical inner surface 28b of the cage 28 are offset by equal distances in opposite axial directions, with a joint center O therebetween.

In this instance, a driven shaft includes the outer ring 23 of the constant velocity universal joint and a cylindrical body 30 joined with the outer ring 23. The outer ring 23 and the cylindrical body 30 are, for example, joined by friction welding.

A shaft (stub shaft) 31 on a driving shaft side is fitted into the inner ring 26 of the constant velocity universal joint. In other words, a spline section 26a is formed on an inner circumferential surface of a center hole of the inner ring 26. An end spline section 31a of the shaft (stub shaft) 31 is inserted into the center hole. The spline section 26a on the inner ring 26 side and the end spline section 31a on the shaft 31 side engage. A stopper ring 32 is attached to the end of the end spline section 31a of the stub shaft 31.

An opening section of the outer ring 23 on the stub shaft 31 side is sealed by a boot 33. The boot 33 includes a large diameter section 33a, a small diameter section 33b, and a connecting section 33c. The large diameter section 33a is attached to the outer ring 23. The small diameter section 33b is attached to the stub shaft 31. The connecting section 33c connects the large diameter section 33a and the small diameter section 33b. The large diameter section 33a includes a first cylindrical section 34, a radial direction wall section 35, and a second cylindrical section 36. The first cylindrical section 34 is fitted onto the outer ring 23. The radial direction wall section 35 extends in an inner radial direction from the first cylindrical section 34 and corresponds with an end surface of the outer ring 23. The second cylindrical section 36 extends in the axial direction from the radial direction wall section 35. A reinforcing material 37 is disposed within the large diameter section 33a. The connecting section 33c includes a first section 50, a second section 51, and a curved section 52. When the constant velocity universal joint is in a neutral state, the first section 50 extends from the second cylindrical section 36 towards the outer ring 23 side. The second section 51 extends from the small diameter section 33b towards the outer ring 23 side. The curved section 52 connects the first section 50 and the second section 51.

The large diameter section 33a of the boot 33 is fixed onto the outer ring 23 by a boot band 38 being fastened in a state in which the first cylindrical section 34 is fitted onto the opening section of the outer ring 23. The small diameter section 33b of the boot 33 is fixed onto the stub shaft 31 by a boot band 39 being fastened in a state in which the small diameter section 33b is fitted onto a boot attaching section of the stub shaft 31.

A circlip (stopper ring) 42 is disposed on the opening section of the outer ring 23 on the boot 33 side. The circlip 42 prevents detachment of an internal member S1 through the opening section. In other words, a circumferential direction groove 43 is provided on an inner diameter surface of the outer ring 23 on the boot 33 side. The stopper ring 42 made of a high-strength material, such as piano wire or high-strength steel wire, is fitted into the groove 43.

A sealing plate (end plate) 40 for holding lubricating grease within is attached to the outer ring 23. The sealing plate 40 includes a disk-shaped main body 40a and a circumferential wall 40b. The circumferential wall 40b extends in the axial direction from an outer circumferential edge of the disk-shaped main body 40a. The sealing plate 40 is fitted into the cylindrical body 30 side of the outer ring 23. At this time, the outer diameter dimension of the circumferential wall 40b is slightly larger than the inner diameter dimension of an attaching section 41 of the outer ring 23. The sealing plate 40 is press-fitted into the attaching section 41 of the outer ring 23. In other words, the outer ring 23 includes a main body section 23a and a sub section 23b. The track grooves 22 are formed on the main body section 23a. The sub section 23b has a larger diameter than the main body section 23a. An end surface of the sub section 23b is joined with an end surface of the cylindrical body 30. An inner diameter surface of the main body section 23a on the sub section 23b side serves as the attaching section 41. A detaching force of the sealing plate 40 is, for example, set to be about 0.5kN to 3kN.

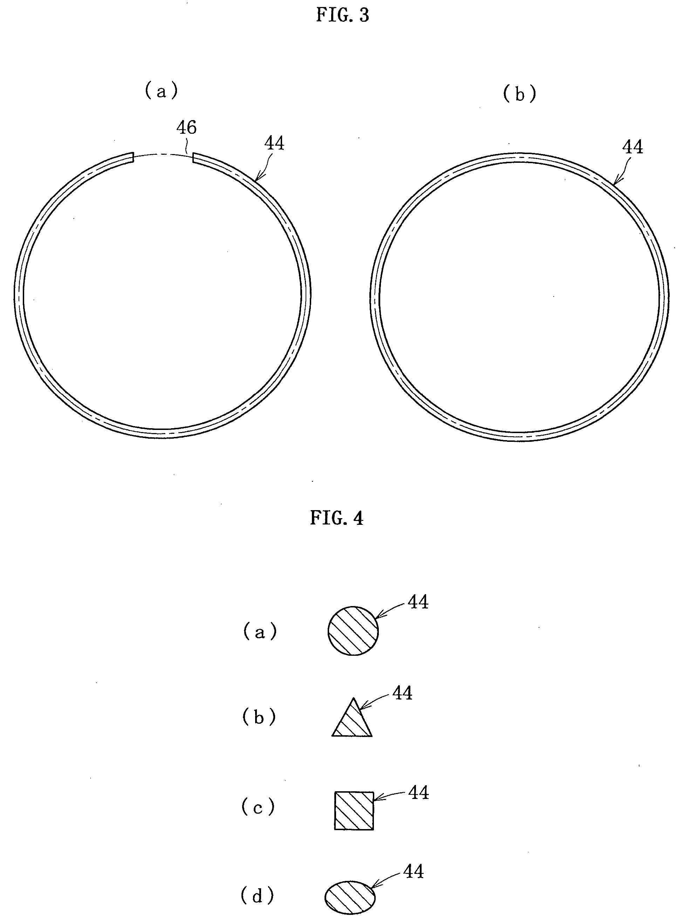

As shown in Fig. 3A, a ring-shaped circlip (stopper ring) 44 is disposed near the attaching section 41. An absent section 46 is provided in a portion of the circlip 44. A circumferential direction groove 45 is provided near the attaching section 41, on the inner diameter surface of the outer ring 23. The stopper ring 44 is fitted into the groove 45. The stopper ring 44 is made of a low-strength material having a low failure strength, such as low-carbon steel wire, nonferrous metal, resin, or rubber. In the instance shown in Fig. 1, a cross-sectional shape of the stopper ring 44 is circular, as shown in Fig. 4A. However, the cross-sectional shape can be triangular as shown in Fig. 4B, rectangular as shown in Fig. 4C, or elliptical as shown in Fig. 4D.

The stopper ring 44 can be an endless ring (such as an O-ring) that does not have an absent section, as shown in Fig. 3B. In this instance, because the absent section is not provided, the stopper ring 44 is preferably made of an elastic material, such as rubber, taking into consideration ease of fitting the stopper ring 44 into the groove 45.

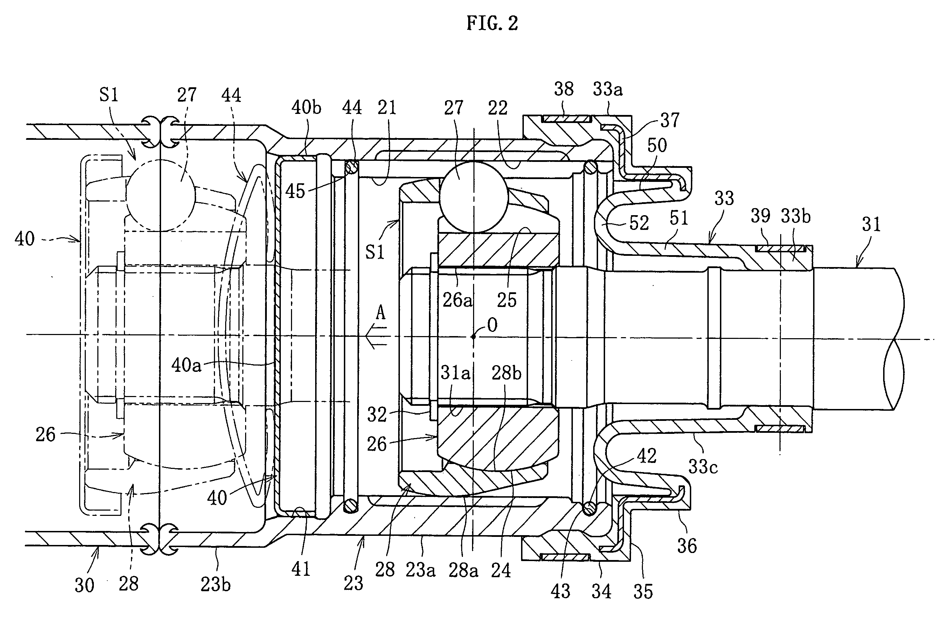

When a vehicle using the constant velocity universal joint for a propeller shaft, configured as described above, is in a collision or the like, the shaft 31 moves inward into the outer ring 23, as indicated by phantom lines in Fig. 2. At this time, the circlip 44 collides with the internal member S1. Because the circlip 44 is made of a low-strength material having a low failure strength, the circlip 44 is broken by the collision. In other words, when a pressing force applied to the sealing plate 40 by the internal member S1 exceeds, for example, 0.5kN to 3kN, as described above, an equal amount of pressing force or greater is also applied to the circlip 44. The circlip 44 has an amount of strength and rigidity that causes the circlip 44 to break, detach from the circumferential direction groove 45, or the like.

The internal member S1 is allowed to further slide in an arrow A direction. As a result, the internal member S1 hits the sealing plate 40. As indicated by the phantom lines in Fig. 2, the sealing plate 40 detaches from the attaching section 41, and is pressed with the internal member S1 towards the cylindrical body 30 side. In other words, for example, the pressing force applied to the sealing plate 40 by the internal member S1 during collision exceeds 0.5kN to 3kN. When the internal member S1 hits the sealing plate 40, the sealing plate 40 detaches from the attaching section 41. At this time, the boot 13 is cut at the connecting section 33c.

In the constant velocity universal joint for a propeller shaft of the present invention, contact between the internal member S1 and the sealing plate 40 is prevented in a non-impact situation. Therefore, detachment of the sealing plate 40 can be prevented during assembly and the like that are non-impact situations. Ease of handling during assembly and the like is excellent. When impact occurs, the sealing plate 40 is allowed to become detached as a result of the internal member S1 hitting the sealing plate 40 side. Therefore, the internal member S1 can slide over a great distance towards the counter-opening section side. As a result, impact during a collision and the like can be absorbed. Sufficient shock absorbing performance can be achieved, and damage to the internal member S1 and the like can be prevented.

Because the circlip 44 is made of a low-strength material, reliability of impact absorption during a collision and the like can be enhanced. Moreover, the circlip 44 is a ring of which a portion is an absent section. Alternatively, the circlip 44 is a rubber ring, such as an O-ring. Therefore, the circlip 44 can be easily stretched and contracted, simplifying attachment operation.

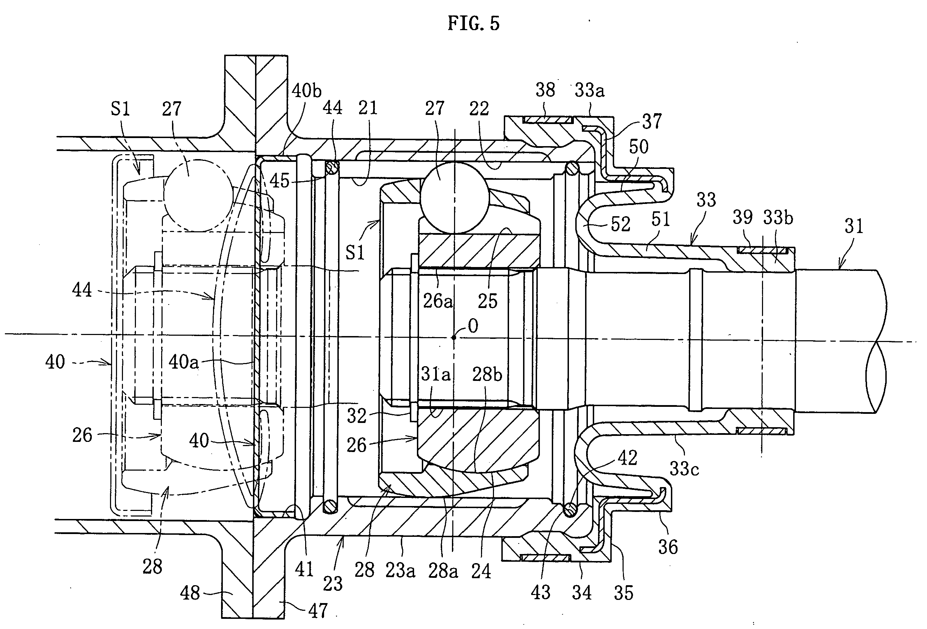

Next, Fig. 5 is a diagram according to another embodiment. In this instance, the outer ring 23 and the cylindrical body 30 are respectively provided with a flange 47 and a flange 48. The flange 47 and the flange 48 are coupled and connected by, for example, a bolt and nut connection.

Other configurations of the constant velocity universal joint for a propeller shaft shown in Fig. 5 are similar to those of the constant velocity universal joint for a propeller shaft shown in Fig. 1 and the like. Members that are the same are given the same reference numbers as those in Fig. 1 and the like. Explanations thereof are omitted.

Therefore, the constant velocity universal joint for a propeller shaft shown in Fig. 5 achieves the same operational effects as the constant velocity universal joint for a propeller shaft shown in Fig. 1.

Embodiments of the present invention are described above. However, the present invention is not limited to the above-described embodiments. Various modifications can be made. For example, according to the embodiments, the constant velocity universal joint is a double offset type constant velocity universal joint (DOJ) that uses a ball. However, other sliding type constant velocity universal joints, such as a tripod type constant velocity universal joint (TJ) using a tripod member, can also be used. Moreover, according to the embodiment shown in Fig. 1, the outer ring 23 and the cylindrical body 30 are joined by friction welding. However, for example, fusion welding can be performed in which areas to be joined are melted, and subsequently joined and solidified. Alternatively, diffusion welding can be performed in which materials to be joined are heated and joined using inter-diffusion of atoms. Alternatively, soldering can be performed in which a metal having a lower melting point than the materials to be joined is poured between the materials. Moreover, the cross-sectional shape of the circlip 44 can be a shape other than those shown in Fig. 4A to Fig. 4D. The circlip 44 is merely required to have a failure strength sufficient for preventing the circlip 44 from breaking should the internal member S1 hit the circlip 44 during handling before assembly to the power transmission system and the like, and allowing the circlip 44 to break as a result of pressing force applied by the internal member S1 during a vehicle collision after assembly.

## Claims

1. A constant velocity universal joint for a propeller shaft including an outer joint member (23), an inner joint member (26) fitted into the outer joint member (23), the outer joint member (23) including a sealing plate (40) and a circlip (44), the circlip (44) being disposed in a circumferential groove (45) provided in an inner surface of the outer joint member (23) closer to the inner joint member (26) than the sealing plate (40), and a torque transmitting member (27) that is interposed between the outer joint member (23) and the inner joint member (26) and transmits torque, in which a shaft (31) is inserted into the inner joint member (26), and an internal member (S1) including the inner joint member (26) slides along an axial direction in relation to the outer joint member (26),
**characterized in that**
the circlip (44) is made of a low-strength material having such a strength and rigidity that causes the circlip (44) to break or to be detached from the circumferential groove (45) due to the sliding movement of the internal member (S1) towards the sealing plate side when impact occurs, so that the circlip (44) restricts contact between the internal member (S1) and the sealing plate (40) in a non-impact situation, and the circlip (44) allows the internal member (S1) to hit the sealing plate (40), thereby detaching the sealing plate (40) from the outer joint member (23), when impact occurs, wherein the circlip (44) and the sealing plate (40) are arranged such that the internal member (S1) hits the sealing plate (40) after the circlip (44) breaks or is detached from the circumferential groove (45).

2. The constant velocity universal joint for a propeller shaft according to claim 1, wherein the circlip (44) breaks or is detached from the circumferential groove (45) when a pressing force exceeding the range of 0.5kN to 3kN is applied to the circlip (44).

3. The constant velocity universal joint for a propeller shaft according to claim 1 or 2, wherein the circlip (44) is a ring having a portion that is an absent section or an endless ring, such as on O-ring, that does not have an absent section.

## Patentansprüche

1. Gleichlauf-Universalgelenk für eine Gelenkwelle, das ein äußeres Gelenkelement (23), ein inneres Gelenkelement (26), das in das äußere Gelenkelement (23) eingepasst ist, enthält, wobei das äußere Gelenkelement (23) eine Dichtungsplatte (40) und einen Sprengring (44) enthält, wobei der Sprengring in einer Umfangsnut (45) angeordnet ist, die in einer Innenfläche des äußeren Gelenkelements (23) näher zu dem inneren Gelenkelement (26) als zu der Dichtungsplatte (40) angeordnet ist, und ein Drehmomentübertragungselement (27) enthält, das zwischen dem äußeren Gelenkelement (23) und dem inneren Gelenkelement (26) angeordnet ist und ein Drehmoment überträgt, wobei eine Welle in das innere Gelenkelement (26) eingesetzt ist und wobei ein inneres Element (S1), dass das innere Gelenkelement (26) enthält, entlang einer Axialrichtung in Beziehung zu dem äußeren Gelenkelement (26) gleitet, **dadurch gekennzeichnet, dass**
der Sprengring (44) aus einem niederfesten Material hergestellt ist, das eine solche Festigkeit und Steifigkeit hat, die bewirkt, dass der Sprengring (44) bricht oder von der Umfangsnut (45) aufgrund der Gleitbewegung des inneren Elements (S1) zu der Seite der Dichtungsplatte hin sich löst, wenn ein Aufprall auftritt, so dass der Sprengring (44) einen Kontakt zwischen dem inneren Element (S1) und der Dichtungsplatte (40) in einer aufprallfreien Situation beschränkt, und der Sprengring (44) dem inneren Element (S1) ermöglicht, an die Dichtungsplatte (40) anzustoßen, um dadurch die Dichtungsplatte (40) von dem äußeren Gelenkelement (23) zu lösen, wenn ein Aufprall auftritt, wobei der Sprengring (44) und die Dichtungsplatte (40) solcherart angeordnet sind, dass das innere Element (21) an die Dichtungsplatte (40) anstößt, nachdem der Sprengring (40) gebrochen ist oder sich von der Umfangsnut (45) gelöst hat.

2. Gleichlauf-Universalgelenk für eine Gelenkwelle nach Anspruch 1, wobei der Sprengring (44) bricht oder sich von der Umfangsnut (45) löst, wenn eine Anpresskraft auf den Sprengring (44) aufgebracht wird, die den Bereich von 0,5kN bis 3kN überschreitet.

3. Gleichlauf-Universalgelenk für eine Gelenkwelle nach Anspruch 1 oder 2, wobei der Sprengring (44) ein Ring ist, der einen Bereich aufweist, der ein fehlender Abschnitt ist, oder ein Endlosring ist, wie z.B. ein O-Ring ist, der keinen fehlenden Abschnitt aufweist.

## Revendications

1. Joint universel homocinétique pour un arbre de transmission incluant un élément formant joint externe (23), un élément formant joint interne (26) ajusté dans l'élément formant joint externe (23), l'élément formant joint externe (23) incluant une plaque d'étanchéité (40) et un circlip (44), le circlip (44) étant placé dans une rainure circonférentielle (45) ménagée dans la surface interne de l'élément formant joint externe (23) plus proche de l'élément formant joint interne (26) que la plaque d'étanchéité (40), ainsi qu'un élément de transmission de couple (27) qui est intercalé entre l'élément formant joint externe (23) et l'élément formant joint interne (26) et qui transmet un couple, dans lequel un arbre (31) est inséré dans l'élément formant joint interne (26) ; et un élément interne (S1) incluant l'élément formant joint interne (26) coulisse le long d'une direction axiale par rapport à l'élément formant joint externe (23),
**caractérisé en ce que**
le circlip (44) est constitué d'un matériau de faible résistance présentant une résistance et une rigidité telles que cela amène le circlip (44) à casser ou à se détacher de la rainure circonférentielle (45) en raison du mouvement de coulissement de l'élément interne (S1) vers le côté de la plaque d'étanchéité lorsque se produit un choc, de telle sorte que le circlip (44) restreint tout contact entre l'élément interne (S1) et la plaque d'étanchéité (40) dans une situation hors choc, et le circlip (44) permet à l'élément interne (S1) de venir frapper la plaque étanchéité (40) en détachant ainsi la plaque étanchéité (40) de l'élément formant joint externe (23) lorsque se produit un choc, le circlip (44) et la plaque étanchéité (40) étant disposés de telle sorte que l'élément interne (S1) frappe la plaque étanchéité (40) après la rupture du circlip (44) ou son détachement de la rainure circonférentielle (45).

2. Joint universel homocinétique pour un arbre de transmission selon la revendication 1, dans lequel le circlip (44) casse ou se détache de la rainure circonférentielle (45) lorsqu'une force de compression dépassant la plage de 0,5 kN à 3 kN est appliquée sur le circlip (44).

3. Joint universel homocinétique pour un arbre de transmission selon la revendication 1 ou la revendication 2, dans lequel le circlip (44) est une bague comportant une partie qui représente une section absente ou une bague continue, comme par exemple un joint torique, qui ne comporte pas de section absente.
